# EUROPÄISCHE PATENTANMELDUNG

(11) **EP 1 112 685 A1**
(43) Veröffentlichungstag der Anmeldung: **04.07.2001**
(21) Anmeldenummer: 99125740.3
(22) Anmeldetag: 23.12.1999
(51) Int. Cl.: A01K 85/16

(54) **Angelköder**

(71) Anmelder: Wolfensberger, Martha, 65451 Kelsterbach (DE)
(72) Erfinder: Wolfensberger, Martha, 65451 Kelsterbach (DE)
(74) Vertreter: Vonnemann, G, Dr.

(57) **Zusammenfassung**

Die Erfindung betrifft einen Angelköder bestehend aus einem Körper (10), vorzugsweise in der Form eines Fisches, an dem mittels mindestens einer Metallöse (2) eine Angelschnur (1) mit dem Körper (10) verbunden ist und mittels mindestens einer weiteren Öse (2, 8) Angelhaken (9, 7) befestigt sind. Aufgabe der Erfindung ist es, den Köder so auszubilden, daß er beim Ziehen der Angelschnur (1) sich auf Bahnen bewegt, die erheblich von der direkten Linie Richtung Angler abweichen und damit den natürlichen Bewegungen von lebenden Beutefischen entsprechen. Eine weitere Aufgabe der Erfindung besteht darin, den Angelköder äußerlich so zu gestalten, daß seine Silhouette der eines echten Fisches entspricht und trotzdem die natürliche Schwimmbewegung beibehalten wird. Die der Erfindung zugrundeliegenden Aufgaben werden dadurch gelöst, daß die vordere Hälfte des Körpers (10) zwei Metall- oder Kunststofllächen (3, 14), vorzugsweise in Form der Brustflossen von Fischen, aufweist.

## Beschreibung

Die Erfindung betrifft einen Angelköder bestehend aus einem Körper, vorzugsweise in der Form eines Fisches, an dem mittels mindestens einer Metallöse eine Angelschnur mit dem Körper verbunden ist und mittels mindestens einer weiteren Öse Angelhaken befestigt sind.

Es sind Angelköder mit der Bezeichnung "Wobbler" bekannt.

Die Angelköder "Wobbler" haben ebenfalls eine den Fischen nachempfundene Körperform. Im Kopfbereich der Wobbler ist auf der Körperunterseite zentrisch eine aus Metall oder Kunststoff gefertigte unbewegliche Tauchschaufel befestigt. Die Tauchschaufel hat vorzugsweise eine ovale flächige Form und ist so am Körper angebracht, daß ihr Neigungswinkel von waagrecht nach vorne zeigend bis hin zu senkrecht nach unten variieren kann. Die Fläche ist dabei stets quer und unbeweglich zur Köderlängsachse befestigt. Der Neigungswinkel der Tauchschaufel beeinflußt die Tauchtiefe des Köder. Waagrechte Schaufeln veranlassen den Köder tief zu tauchen, senkrechte Schaufeln lassen ihn an der Wasseroberfläche schwimmen. Bei stetigem Einholen des Wobblers bewirkt der Staudruck des Wassers auf die Tauchschaufel nicht nur das Abtauchen des Köders, sondern auch eine kurzintervallige links-rechts Drehbewegung um einen Systemdrehpunkt. Der Systemdrehpunkt verläuft bei Wobblem mit Tauchschaufeln meist senkrecht durch die Verbindungsstelle zwischen Tauchschaufel und Körper.

Die Tauchschaufel besteht entweder aus einem undurchsichtigen Material oder aus einem durchsichtigen Kunststoff, der allerdings in seiner Lichtbrechung nicht dem von Wasser entspricht. Das hat zur Folge, daß die Schaufel immer für die Fische im Wasser sichtbar ist und damit die wahrnehmbare Ködersilhouette nicht mehr der eines Beutefisches entspricht.

Auch die wobblertypische Intervallbewegung des Körpers um den Drehpunkt im Kopfbereich entspricht nicht den natürlichen Bewegungen eines Beutefischs.

Außerdem werden diese Bewegungen auf einer geraden Linie hin zum Angler ausgeführt, größere Zick-Zack-Bewegungen oder größere Abweichungen weg von dieser Linie sind bei Wobblern mit Tauchschaufeln nicht möglich. Auch dies entspricht nicht dem natürlichen Schwimmverhalten von echten Beutefischen.

Aufgabe der Erfindung ist es, den Köder so auszubilden, daß er beim Ziehen der Angelschnur sich auf Bahnen bewegt, die erheblich von der direkten Linie Richtung Angler abweichen und damit den natürlichen Bewegungen von lebenden Beutefischen entsprechen.

Eine weitere Aufgabe der Erfindung besteht darin, den Angelköder äußerlich so zu gestalten, daß seine Silhouette der eines echten Fisches entspricht und trotzdem die natürliche Schwimmbewegung beibehalten wird.

Die der Erfindung zugrundeliegenden Aufgaben werden dadurch gelöst, daß die vordere Hälfte des Körpers zwei Metall- oder Kunststofflächen, vorzugsweise in Form der Brustflossen von Fischen, aufweist.

Diese brustflossenähnlichen Flächen aus Metall oder Kunststoff sind so geneigt, daß sie seitlich und auf die Köderlängsachse bezogen betrachtet, von unterhalb der Köderlängsachse hinter dem Kopf beginnend, Richtung Köderhinterteil und dabei die Köderlängsachse übersteigend, verlaufen. Der Neigungswinkel liegt dabei, gemessen vom Beginn der Metall- oder Kunststofflächen im Bereich des Köderkopfendes, bezogen auf die Köderlängsachse als Nullinie, zwischen 1 Grad und 89 Grad. Der Neigungswinkel bestimmt dabei die Tauchtiefe des Köders, je kleiner der Neigungswinkel desto größer die Tauchtiefe. Bei einem Neigungswinkel von 89 Grad schwimmt der Köder im Nahbereich der Wasseroberfläche. Die Verbindung dieser beiden Brustflossen miteinander, besteht aus einer Querachse aus Metall oder Kunststoff. Die Querachse und die daran befestigten zwei Metalloder Kunststoffbrustflossen können sich um eine zentrisch durch die Querachse verlaufende Systemachse drehen. Die Querachse verläuft dabei durch den Achsenschacht innerhalb des Körpers oder ist von außen mittels der Systemachse drehbar unterhalb des Körpers angebracht. Die Fläche der einzelnen Metall- oder Kunststoffbrustflossen liegt in einem Bereich zwischen 50% bis 300% der projizierten Stirnfläche des Köderkörpers.

Wird der Angelköder mittels der Angelschnur auf den Angler zubewegt, wandert eine der zwei Brustflossen aufgrund des Wasserdrucks zufallsbedingt nach hinten, während sich die andere zeitgleich nach vorne bewegt. Die sich nach hinten bewegende Fläche wirkt dabei wie ein Ruder und zwingt den Angelköder in ihre Richtung. Nach dieser Richtungsänderung gerät die nach hinten gerichtet Fläche in den Strömungsschatten des Köderkörpers, während die nach vorne zeigende Fläche dem Staudruck des anströmenden Wassers voll ausgesetzt ist. Dies führt zu einer entgegengesetzten Drehbewegung der zwei Brustflossen. Die bisher nach hinten zeigende Fläche wandert nach vorne. Die andere, bis dahin nach vorne weisende Fläche bewegt sich nach hinten und wirkt wieder wie ein Seitenruder das den Angelköder zu einer erneuten Richtungsänderung veranlasst. Es entsteht eine Zick-Zack-Schwimmbewegung des Angelköders, bei der der Körper deutlich von der direkten Linie hin zum Angler abweicht.

Die Drehbewegung der zwei Metall- oder Kunststoffbrustflossen ist abhängig von ihrem rechtwinkligen Abstand zur Körperlängsachse. Je weiter der Abstand der zwei Brustflossen vom Körper ist, desto weiter verläuft der bogenförmige Weg der Brustflossenflächen bis die Berührung mit dem Köderkörper die Drehbewegung stoppt.

Ein kurzer Abstand der Brustflossen zum Körper des Angelköders bewirkt schnelle Richtungswechsel mit geringen Abweichungen von der direkten Linie Richtung Angler. Je größer der Abstand der Brustflossen zum Körper des Angelköders ist, je größer sind die Abweichungen von der Zuggeraden und desto länger sind die Amplitudenperioden innerhalb der Schwimmbewegung.

Eine Weiterbildung der Erfindung besteht darin, daß die Querachse, mit der die beiden Brustflossenflächen verbunden sind, gepfeilt ist. Diese Pfeilung kann entlang der Längsachse sowohl nach vorne als auch nach hinten zeigen und beieinflußt die Empfindlichkeit des Verbunds Querachse und Brustflossen. Der Winkel der Pfeilung umschließt die Systemachse. Eine nach vorne gepfeilte Querachse macht die Brustflossen-Querachsen-Kombination unter Wasserdruck instabiler und damit beweglicher, eine nach hinten gepfeilte Querachse dämpft die Empfindlichkeit und wirkt stabilisierend. Eine negative nach hinten zeigende Pfeilung von unter 120 Grad läßt keine Drehbewegung um die Systemachse mehr zu. Schließlich besteht noch ein wesentlicher Erfindungsgedanke darin, das die Systemachse nicht senkrecht durch die Querachse und im Körper des Angelköders verläuft, sondern gegenüber der gedachten Längsachse des Köders nach vorne oder nach hinten geneigt ist. Der Neigungswinkel der Systemachse kann dabei in Bezug auf die Köderlängsachse in dem Bereich zwischen 5 und 175 Grad liegen.

Die Neigung der Systemachse nach vorne bewirkt, daß sich die beiden Brustflossenflächen zwar weiterhin um einen rechtwinklig zur Systemachse verlaufenden Radius drehen, die nach vorne wandernde Brustflossenfläche sich von der gedachten Köderlängsache nach unten entfernt, die sich nach hinten bewegende Flosse steigt gegenüber der Längsachse nach oben. Daraus resultiert zu dem bereits beschriebenen Bewegungsablauf des Angelköders in Richtung nach hinten zeigende Brustflosse ein abwechselndes Kippen des Angelköders um die Längsachse um bis zu 45 Grad. Ist die Systemachse nach vorne geneigt, dreht sich der Köder entlang seiner Längsachse um bis zu 45 Grad auf die Seite der nach vorne zeigenden Brustflossenfläche. Bei nach hinten gerichteter Systemachse kippt der Körper auf die Seite der nach hinten zeigenden Brustflossenfläche. Dieser Kippeffekt um die Längsachse wird ums so stärker, je höher die Querachse durch den Köderkörper verläuft. Der Effekt ist bei unterhalb des Körpers angebrachter Systemachse am geringsten.

Bei entsprechender Farbgebung des Angelköders, entsteht durch die abwechselnden Kippbewegungen auf die zwei Köderseiten um die Köderlängsachse, das für lebende Beutefische charakteristische Aufblitzen der Körperflanken während des Schwimmens.

Anhand der Zeichnungen, die Ausführungsbeispiele darstellen, wird die Erfindung näher beschrieben.

Es zeigen:

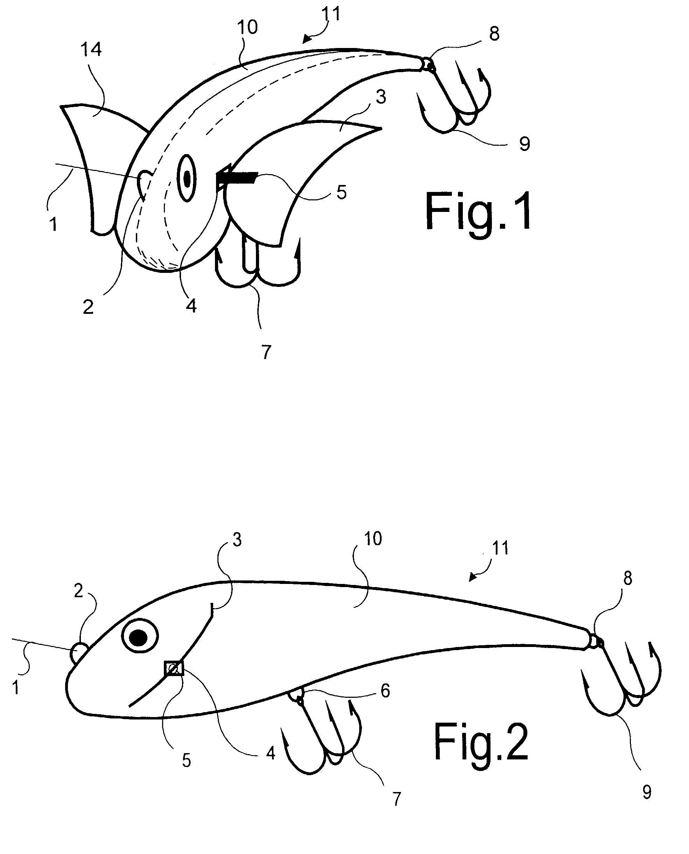

- Fig.1:: eine schematische Ansicht eines erfindungsgemäßen Köder,
- Fig.2:: eine Seitenansicht des Köders,

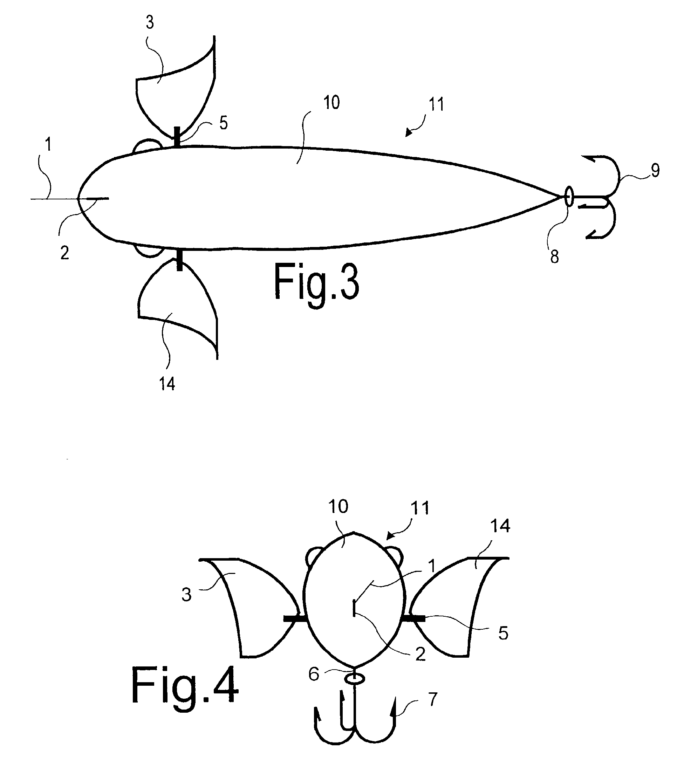

- Fig.3:: eine Draufsicht des Köders,
- Fig.4:: eine Vorderansicht des Köders,

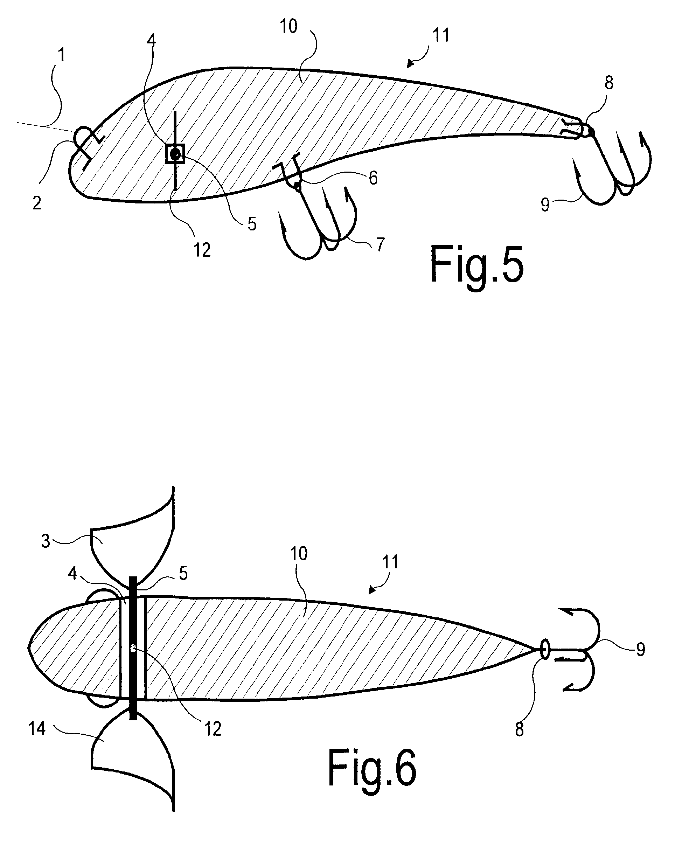

- Fig.5:: eine Längsschnittansicht des Köders gemäß Fig.2,
- Fig.6:: eine Längsschnittansicht des Köders gemäß Fig.3,

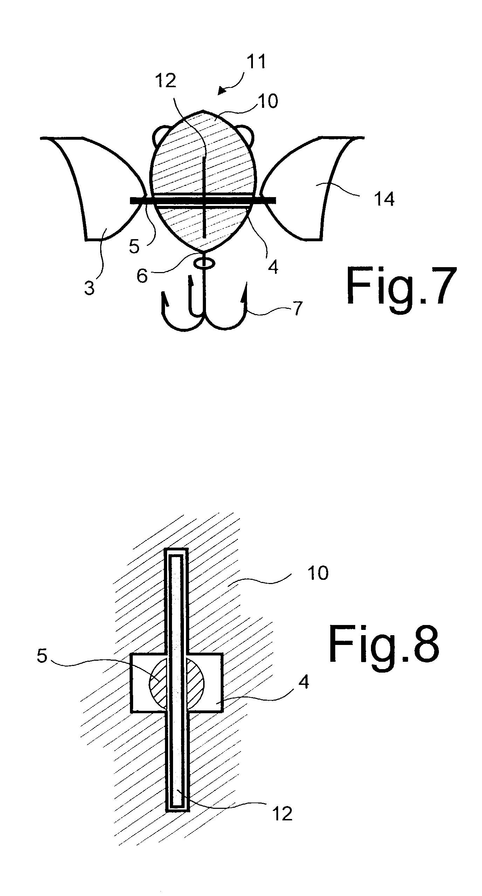

- Fig.7:: eine Querschnittsansiche des Köders gemäß Fig.4,
- Fig.8:: eine vergrößerte Darstellung von Achsenschacht, Querachse und Systemachse aus Fig.5,

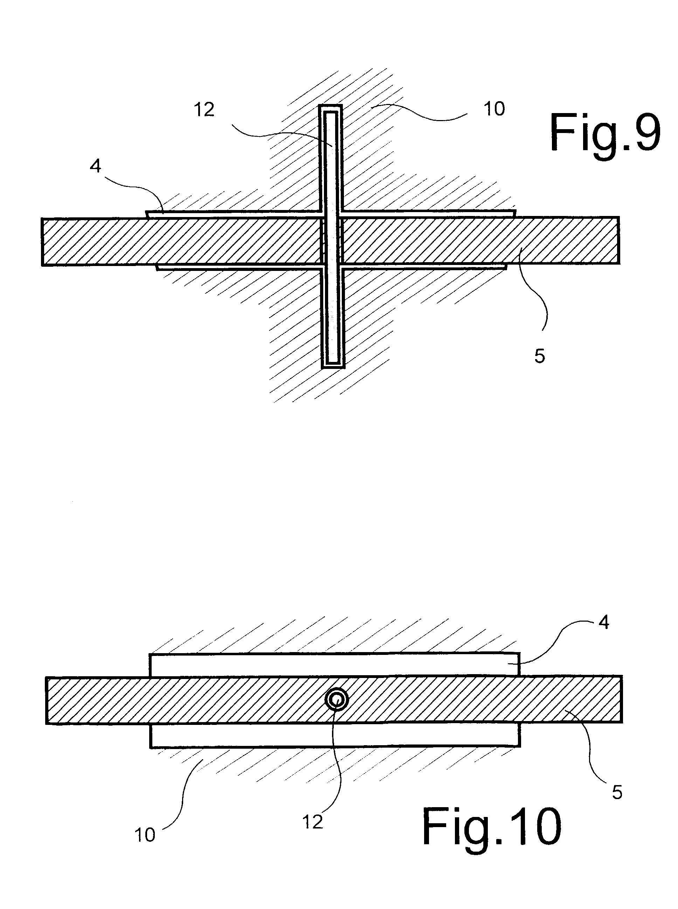

- Fig.9:: eine vergrößerte Darstellung von Achsenschacht, Querachse und Systemachse aus Fig.7,
- Fig.10:: eine vergrößerte Darstellung von Achsenschacht, Querachse und Systemachse aus Fig.6,
- Fig.11:: Seitenansicht des Köders mit einem Körper aus vier beweglich miteinander verbunden Körpersegmenten,
- Fig.12:: Draufsicht des Köders mit einem Körper aus vier beweglich miteinander verbunden Körpersegmenten,
- Fig.13:: eine Längsschnittansicht der Verbindung von zwei Körpersegmenten
- Fig. 14:: gemäß Fig. 11,Fig.14: eine Längsschnittansicht des Köders gemäß Fig.3, mit um die Systemachse gedrehter Querachse,
- Fig.15:: eine Darstellung der zick-zack-förmigen Bewegungsbahn des Köders,
- Fig.16:: eine Querschnittszeichnung des Köders mit unten liegender Querachse gemäß Fig. 24 , jedoch mit nach vorne geneigter Systemachse gemäß Fig.23 und dabei gedrehter Querachse. Die Zeichnung verdeutlicht die daraus resultierende Kippbewegung des Körpers,
- Fig.17:: eine vergrößerte Darstellung von Achsenschacht, Querachse und Systemachse gemäß Fig.16 wobei die Querachse eine nach vorne zeigende V-Form aufweist,
- Fig.18:: eine vergrößerte Darstellung von Achsenschacht, Querachse und Systemachse gemäß Fig.16, wobei die Querachse eine nach hinten zeigende V-Form aufweist,
- Fig.19:: eine Längsschnittansicht des Köders gemäß Fig.2, jedoch mit nach hinten geneigter Systemachse,
- Fig.20:: eine Längsschnittansicht des Köders gemäß Fig.2, jedoch mit nach vorne geneigter Systemachse,
- Fig.21:: eine Seitenansicht des Köders mit nach vorne geneigter Systemachse gemäß Fig. 20 und der Darstellung einer nach hinten zeigenden Brustflossenfläche, die die Köderlängsachse deutlich übersteigt,
- Fig.22:: eine Seitenansicht des Köders mit nach vorne geneigter Systemachse gemäß Fig. 20 und der Darstellung einer nach vorne zeigenden Brustflossenfläche, die die Köderlängsachse deutlich unterschreitet,
- Fig.23:: linker Teil: eine Querachse mit schräg verlaufender Systemachse, Rechter Teil: die Abweichung der Querachse von der gestrichelten Waagerechten bei Drehung um eine nach vorne geneigte Systemachse,
- Fig.24:: eine schematische Ansicht eines erfindungsgemäßen Köders, jedoch mit einer Querachse, die auf der Unterseite des Körpers angebracht ist,
- Fig.25:: eine Querschnittsansicht des Köders gemäß Fig.4, jedoch mit einer Querachse, die auf der Unterseite des Körpers angebracht ist, und
- Fig.26:: eine Längsschnittansicht des Köders gemäß Fig.24 mit unterhalb des Körpers angebrachter Querachse.

Ein Angelköder 11 besteht aus einem fischförmigen Körper 10, in dessen Kopfbereich zwei Fischbrustflossen ähnliche Metall- oder Kunststoffflächen 3 und 14 angebracht sind.

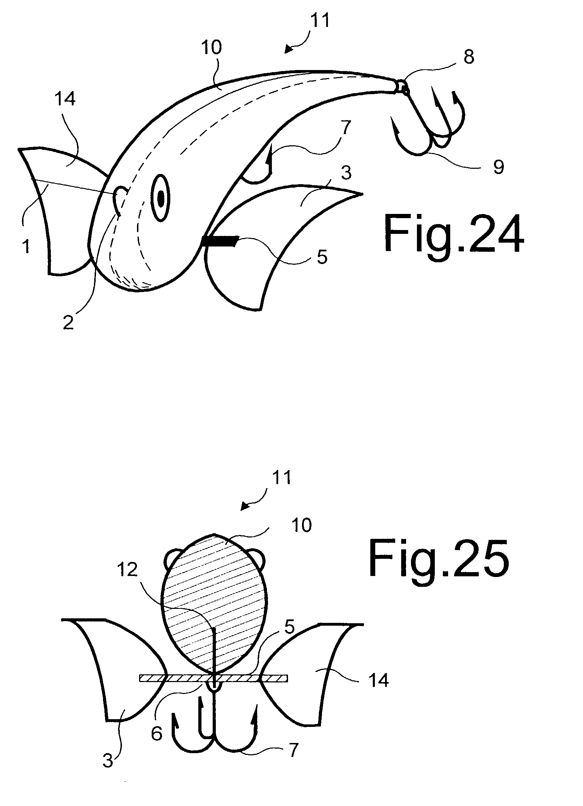

Die Flächen 3 und 14 sind miteinander fest durch eine Querachse 5 verbunden, durch deren Längsmittelpunkt senkrecht eine Systemachse 12 verläuft, um welche sich die Querachse 5 drehen kann. Die Systemachse 12 verläuft vorzugsweise innerhalb eines Achsenschachts 4 quer durch den Körper 10 oder ist mittels der Systemachse 12 drehbar um diese, gemäß der Fig. 24 unterhalb des Körpers 10 am Angelköder 11 befestigt. Außerdem sind durch die Metallöse 2 die Angelschnur 1 am Körper 10, sowie mit den Ösen 6 und 8 die Angelhaken 7 und 9 am Angelköder 11 befestigt.

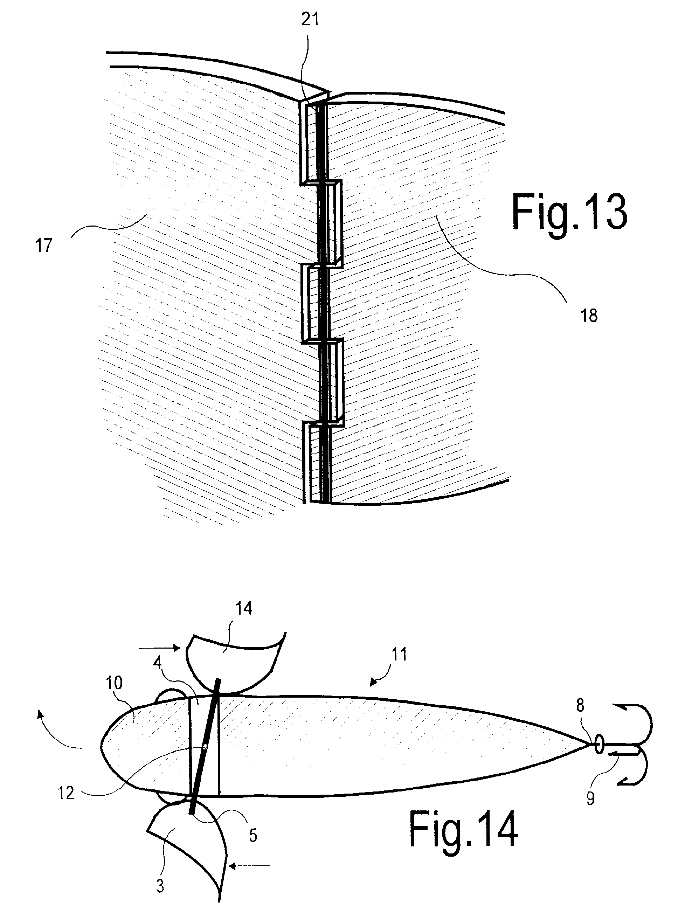

Fig.14 zeigt in einem Längsschnitt des Körpers 10 die Drehbewegung der Flossenflächen 3 und 14. Diese entsteht zufallsbedingt in eine Richtung, wenn aufgrund des Zugs über die Angelschnur 1 auf den Angelköder 11 der Staudruck des Wassers auf die Flächen 3 und 14 zu wirken beginnt. Die Drehbewegung der Querachse 5 und der daran befestigten Flächen 3 und 14 um die Systemachse 12 innerhalb des Achsenschachts 4 wird durch die Berührung mit dem Körper 10 des Angelköders 11 eingeschränkt. Der Winkel des Bewegungsbogens um die Systemachse soll in einem Bereich kleiner als 160 Grad liegen. Die nach nach hinten weisende Fläche, in der Fig. 14 die Fläche 14, wirkt dabei wie ein Querruder und zwingt den Körper 10 in eine Schwimmrichtung nach rechts. Bei stetigem Zug über die Angelschnur 1 gerät die Fläche 14, aufgrund der Abweichung nach rechts, weg von der Geraden Richtung Angler, in den Strömungsschatten des Körpers 10. Dies hat zur Folge, daß die nun frei angeströmte Fläche 3 durch den jetzt auf sie wirkenden Staudruck des Wassers nach hinten gedrückt wird und dabei wiederum den Angelköder 11 in ihre Richtung zwingt.

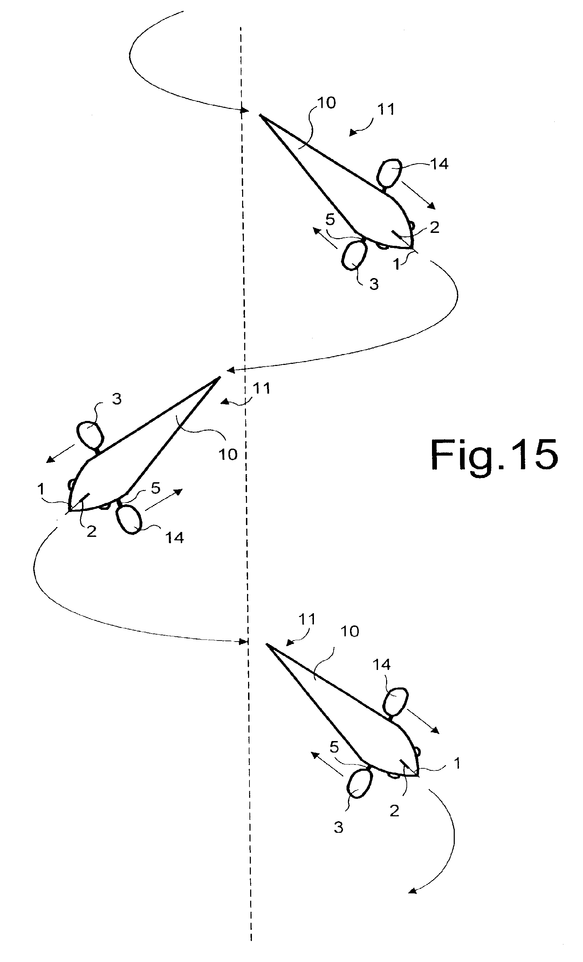

Fig. 15 verdeutlicht die dabei entstehende und für den Angelköder 11 typische zickzack-Schwimmbewegung. Fig. 15 zeigt außerdem, daß die Scheitelpunkte der Amplituden deutlich von der Geraden hin zum Angler entfernt sind.

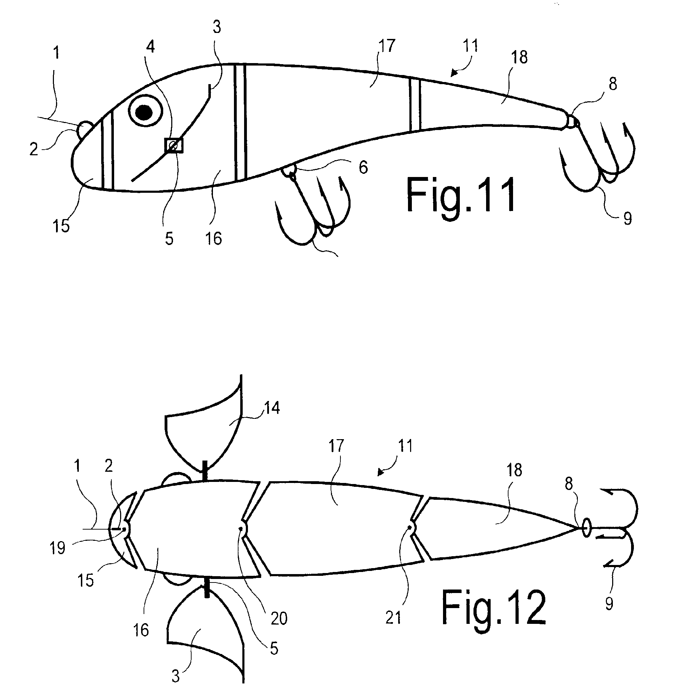

Die Fig.11 und Fig.12 unterscheiden sich von der vorbeschriebenen Ausführung dadurch, daß ein Köder 11 gezeigt wird, der aus mehreren beweglichen, miteinander verbundenen Körpersegmenten 15, 16, 17, 18 besteht. Diese Körpersegmente sind gemäß Fig.12 mittels der Verbindungsachsen 19, 20 und 21 beweglich miteinander verbunden.

Die Fig.13 zeigt im Schnitt die Art der Verbindung zwischen den Körpersegmenten 17 und 18 durch die Verbindungsachse 21.

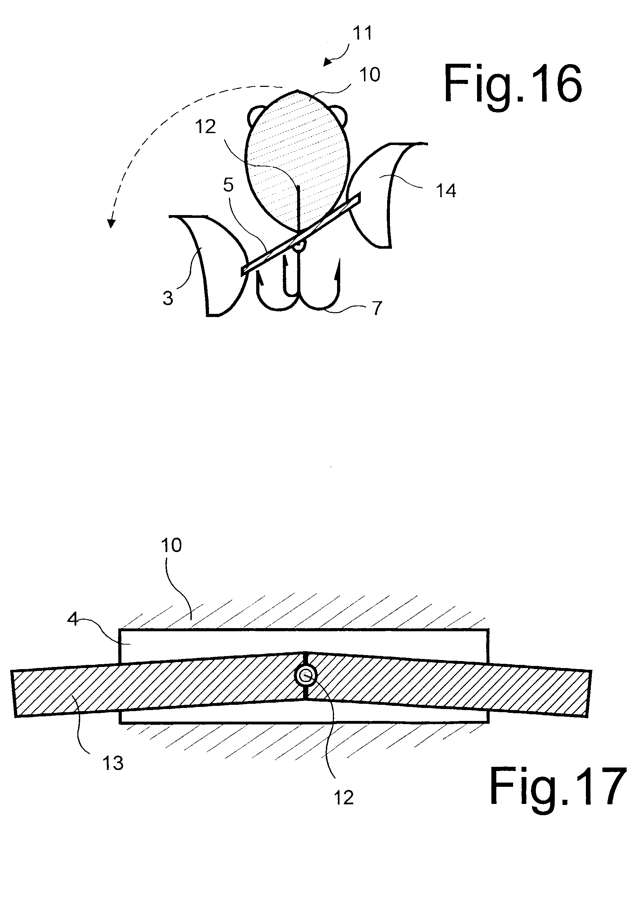

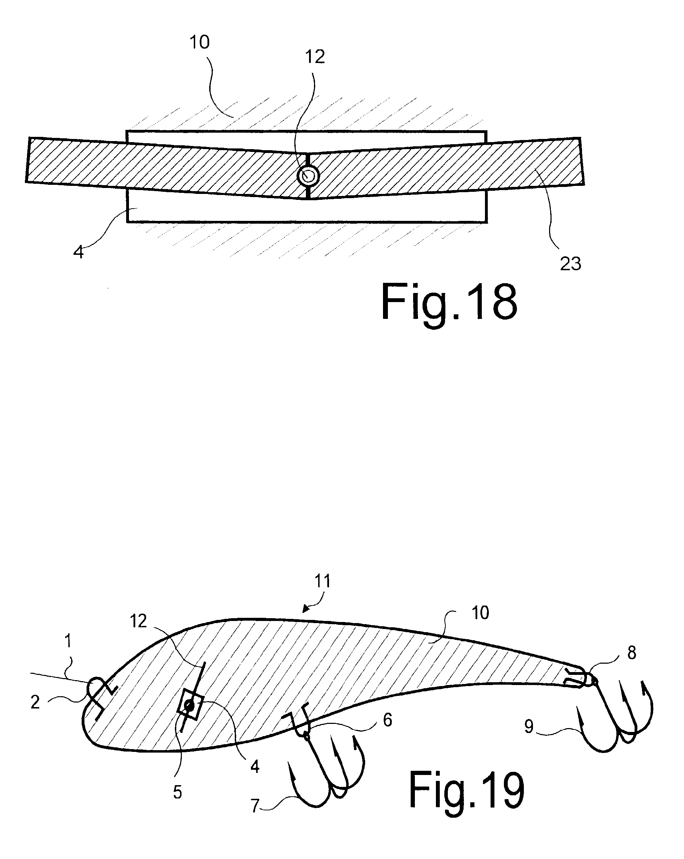

Die Fig.17 und Fig.18 zeigen die Variationsmöglichkeiten der Querachse 5 durch positive, das heißt um die Systemachse 12 nach vorne gepfeilte Querachse 23 oder negativ um die Systemachse 12 nach hinten gepfeilte Querachse 13. Eine positiv gepfeilte Querachsen 23 bewirkt über die an ihr befestigen Flächen 3 und 14 und des darauf einwirkenden Wasserdrucks eine gewünschte Destabilisierung um die Systemachse 12. Bei positiv gepfeilter Querachsen 23 liegt der verwendete Winkel zwischen 10 und 179 Grad. Die negativ gepfeilte Querachsen 13 gemäß Fig.17 dämpfen die Bewegung der Querachse 13 um die Systemachse 12. Der bei negativ gepfeilten Querachsen 13 verwendete Winkel soll 120 Grad nicht unterschreiten.

Der Köder 11 gemäß Fig. 19 bis 20 zeigen einen Körper 10 mit nach nach hinten und alternativ nach vorne geneigter Systemachse.

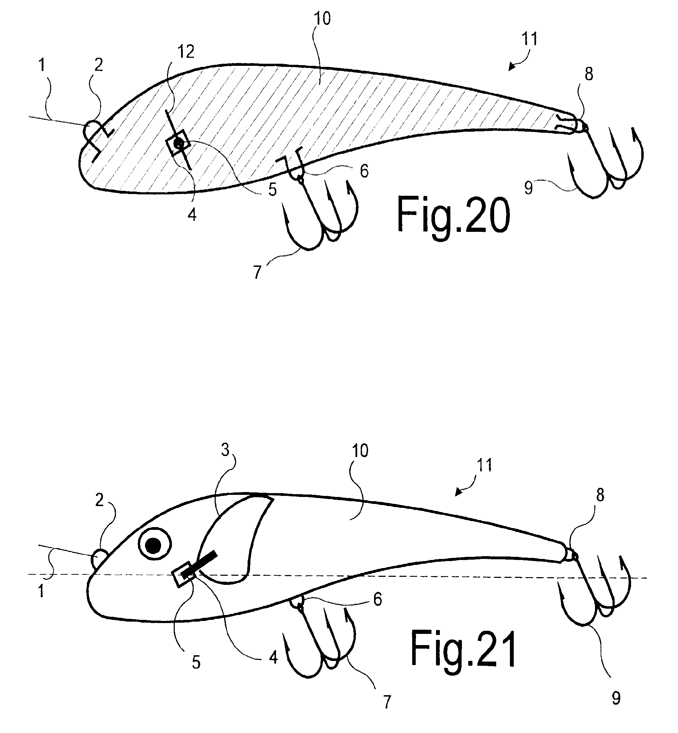

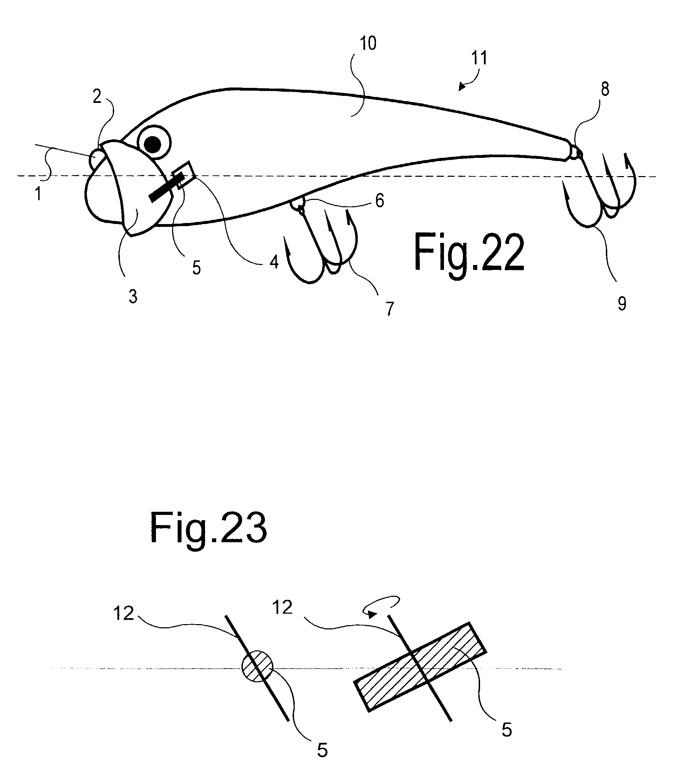

Die Fig. 21 bis 23 veranschaulichen dabei die Funktionsweise dieser Bauart anhand eines Köders 11 mit nach vorne geneigter Systemachse 12, und zeigen bauartbedingte abwechselnde Unter- und Überschreitung der Köderlängsachse durch die Brustflossenfläche 3 bei Drehung um die Systemachse 12. Die damit verbunden Kippbewegung des Körpers 10 um seine Längsachse wird explizit an Fig. 16 dargestellt.

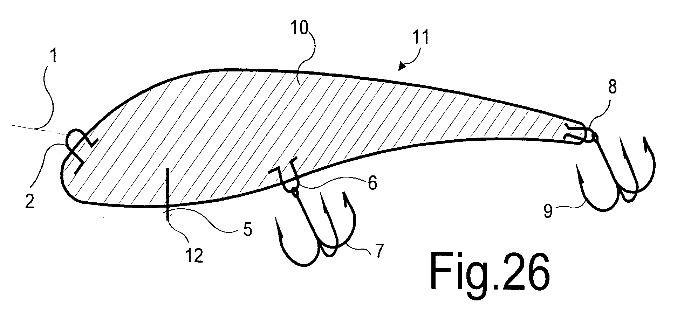

Der Köder 11 gemäß Fig.24 bis 26 und Fig.16 unterscheiden sich von der vorbeschriebenen Ausführung dadurch, daß die Querachse 5 mittels der Systemachse 12, um diese drehbar, auf der Unterseite des Köders 11 von außen am Körper 10 befestigt ist.

## Patentansprüche

1. Angelköder bestehend aus einem Körper (10), vorzugsweise in der Form eines Fisches, an dem mittels mindestens einer Metallöse (2) eine Angelschnur (1) mit dem Körper (10) verbunden ist und mittels mindestens einer weiteren Öse (2, 8) Angelhaken (9, 7) befestigt sind, **dadurch gekennzeichnet**, daß die vordere Hälfte des Körpers (10) zwei Metall- oder Kunsttofflächen (3, 14), vorzugsweise in Form der Brustflossen von Fischen, aufweist.

2. Angelköder nach Anspruch 1, **dadurch gekennzeichnet,** daß die beiden Metalloder Kunststofflächen (3, 14), in einem auf die als Nullinie dienende Köderlängsachse bezogen, nach hinten weisenden Winkel zwischen 1 und 89 Grad fest über eine Querachse (5) miteinander verbunden sind.

3. Angelköder nach einem der Ansprüche 1 oder 2, **dadurch gekennzeichnet**, daß die Querachse (5) innerhalb eines Achsenschachts quer durch den Körper (10) des Köders (11) verläuft.

4. Angelköder nach einem der Ansprüche 1 bis 3, **dadurch gekennzeichnet**, daß die innerhalb des Achsenschachts (4) verlaufende Querachse (5) um eine senkrecht und zentrisch durch den Körper (10) verlaufende Systemachse (12) drehbar angebracht ist.

5. Angelköder nach einem der Ansprüche 1 bis 4, **dadurch gekennzeichnet**, daß der Körper (15, 16, 17, 18) aus mehreren beweglich miteinander verbundenen Segmenten besteht.

6. Angelköder nach einem der Ansprüche 1 bis 5, **dadurch gekennzeichnet**, daß die Querachse (5) bezogen auf die Längsachse des Körpers (10) eine Pfeilung nach vorne (23) oder nach hinten (13) aufweist.

7. Angelköder nach einem der Ansprüche 1 bis 6, **dadurch gekennzeichnet**, daß die Systemachse (12) bezogen auf die Längsachse in einem Winkel zwischen 5 und 175 Grad nach vorne oder nach hinten geneigt ist.

8. Angelköder nach einem der Ansprüche 1 bis 7, **dadurch gekennzeichnet**, daß die Querachse (5) mittels der Systemachse (12) außerhalb des Körpers (10) an der Köderunterseite drehbar befestigt ist.

9. Angelköder nach einem der Ansprüche 1 bis 8, **dadurch gekennzeichnet**, daß die in Form einer Brustflosse eines Fisches nachempfundene Metall- oder Kunststofflächen (3, 14) jeweils eine Größe aufweisen, die im Bereich zwischen 50 und 300% der projizierten Stirnfläche des Körpers (10) des Köders (11) entsprechen
